Europäisches Patentamt

European Patent Office

Office européen des brevets

(19)

(11) **EP 1 277 301 B1**

(12) ## EUROPEAN PATENT SPECIFICATION

(45) Date of publication and mention
of the grant of the patent:
**21.07.2004 Bulletin 2004/30**

(21) Application number: **01943278.0**

(22) Date of filing: **23.04.2001**

(51) Int Cl.⁷: **H04K 1/00**, H04L 9/32

(86) International application number:
**PCT/EP2001/004579**

(87) International publication number:
**WO 2001/084763 (08.11.2001 Gazette 2001/45)**

(54) **METHOD FOR TRANSMITTING PAYMENT INFORMATION BETWEEN A TERMINAL AND A THIRD EQUIPEMENT**

VERFAHREN ZUR ÜBERTRAGUNG EINER ZAHLUNGSINFORMATION ZWISCHEN EINEM ENDGERÄT UND EINER DRITTEN VORRICHTUNG

PROCEDE D'EMISSION D'UNE INFORMATION DE PAIEMENT ENTRE UN TERMINAL ET UN EQUIPEMENT TIERS

(84) Designated Contracting States:
**AT BE CH CY DE DK ES FI FR GB GR IE IT LI LU MC NL PT SE TR**

(30) Priority: **28.04.2000 EP 00109220**

(43) Date of publication of application:
**22.01.2003 Bulletin 2003/04**

(73) Proprietor: **Swisscom Mobile AG**
**3050 Bern (CH)**

(72) Inventors:
• **BUTTYAN, Levente**
**CH-1110 Morges (CH)**
• **WIEDMER, Edwin**
**CH-3173 Oberwangen (CH)**
• **LAUPER, Eric**
**CH-3014 Bern (CH)**

(74) Representative: **Saam, Christophe**
**Patents & Technology Surveys SA**
**Terreaux 7**
**Case Postale 2848**
**2001 Neuchâtel (CH)**

(56) References cited:
**WO-A-99/44114**

• **FRIEDRICHS B: "AUTHENTISCHE UND ZUVERLASSIGE MOBILKOMMUNIKATION FUR SICHERHEITSRELEVANTE ANWENDUNGEN AUTHENTIC AND RELIABLE MOBILE COMMUNICATION FOR SAFETY-RELATED APPLICATIONS PART 1: REQUIREMENTS AND BASIC ALGORITHMS" FREQUENZ,DE,SCHIELE UND SCHON GMBH. BERLIN, vol. 49, no. 1/02, 1995, pages 17-27, XP000503766 ISSN: 0016-1136**
• **HAARTSEN J C: "THE BLUETOOTH RADIO SYSTEM" IEEE PERSONAL COMMUNICATIONS,IEEE COMMUNICATIONS SOCIETY,US, vol. 7, no. 1, February 2000 (2000-02), pages 28-36, XP000908653 NEW YORK ISSN: 1070-9916**

**Description**

The present invention concerns an electronic payment method for goods and services. More specifically, the present invention concerns a method for effecting electronic payments using smart cards and short distance wireless communication technologies.

With the dramatic growth of communication networks (computer as well as telecommunication networks), electronic commerce is becoming a more and more popular idea among business and residential users. One aspect of electronic commerce is electronic payment for goods and services. Electronic payment systems promise more convenience and more security. The latter is based on the application of strong cryptography in order to prevent fraud.

The application of smart cards in user authentication enables the introduction of strong authentication, based on cryptographic techniques, because the smart card can perform cryptographic operations and store cryptographic keys for the user in a tamper resistant zone. Using smart cards, however, requires smart card readers to be installed at the points of authentication and users to produce a smart card and to introduce it in an untrusted equipment.

Smart cards can also be inserted in the smart card slot of a user's mobile equipment, for example a personal digital assistant (PDA) or a mobile phone, in order to provide for a secure authentication in a telecommunication network, e.g. a mobile telecommunication network. The smart card may contain cryptographic computing means, for example a processor and a memory containing a program which can be executed by the processor for computing cryptographic functions, for securing sessions over the mobile network. Mobile stations including a short distance wireless interface, for example a radio or infrared interface, are known that allow for a data transfer and/or synchronization between the mobile station and other terminals or computers in the vicinity. A corresponding arrangement is described in WO-A-99 44 114.

Using the user terminal, for example the user mobile phone, as a smart card reader which can connect to fixed and public terminals (e.g., a PC or a POS terminal in a shop) via a short distance wireless interface has the following advantages:

- in general, the personal mobile equipment of the user allows the user to directly communicate with her smart card (the mobile equipment has a keypad and a display); if traditional smart card readers are used, then the user has to type on the keyboard of the terminal and the smart card can only display messages on the display of the terminal, thus a malicious terminal can alter the communication between the user and the smart card;

- in particular, the smart card is never inserted into an untrusted device, which could try to obtain more data from the smart card than it should; and

- the PIN code or secret that is assigned to the smart card is never typed into an untrusted device, which can misuse or steal it;

- furthermore, there is no need to install smart card readers everywhere and to adapt them to various card formats.

Using a mobile station connected over a wireless interface to a payment terminal poses some new security problems. The main one is the problem of mutual authentication between the smart card and the fixed terminal in the presence of other, potentially malicious users. Other security problems may also arise (e.g. problems related to integrity, confidentiality and privacy).

The main technical problem is that the communication channel between the personal mobile equipement (smart card reader) and the payment terminal (point of authentication) is not secure. When the card reader is built in or physically connected (with a short wire) to a fixed payment terminal, e.g. in a point-of-sale, then the messages and payment orders sent between the card and the terminal cannot be eavesdropped, modified, replayed, etc. by an attacker. This would require physical access to the terminal, the card reader, or the wire that connects them. Moreover, after initial mutual authentication, the card and the terminal can be sure that the messages they receive during the rest of the session come from the other party. When the communication between the smart card and the terminal is based on wireless technologies, then an attacker could eavesdrop and replay messages or payment orders between them, and the card and the terminal can never be sure whether the messages they receive come from the other party or from other smart cards and terminals which are potentially present.

The present invention is concerned with solutions for safely using the user mobile equipment (such as a mobile phone or a personal digital assistant) as the smart card reader, or more generally as cryptographic computing means for authenticating the user when he wants to use a payment terminal. More specifically, the present invention is concerned with solutions for connecting the user mobile station to payment terminals using short distance wireless communication (e.g. Bluetooth, HomeRF or infrared), and which avoid the above-mentioned drawbacks.

According to the invention, the security problems of the prior art are solved with a new protocol that builds a secure (authentic and/or confidential) logical channel between the cryptographic computing means on the user mobile side, the payment terminal and further to the billing server. The secure logical channel is based on a secret that is exclusively shared by the smart card in the mobile equipment and the terminal, and on the application of cryptographic techniques. The main job of the inventive protocol is the safe establishment of this shared secret by involving the user as an authentic channel between the terminal and the mobile station.

The inventive protocol assumes three business roles: the user, the merchant, and the billing server. Each user is registered with at least one billing server, which maintains a billing account for the user. The user is mobile, which means that she physically moves and visits various merchant sites (e.g., shops). The user can buy goods or services from the merchant. Instead of instant payment to the merchant, the appropriate amount is charged to the billing account of the user. The billing server collects charging updates from the merchants and regularly (e.g., at the end of every month) creates one single bill for each user, which contains all the purchases of that user. In a variant embodiment, the billing server debits the money from an electronic account in the user's smart card. The billing server then distributes the appropriate shares to the merchants.

This is not much different from how credit card payment works today. The novelty of the approach is the use of short distance wireless communication technology for the communication between the user (smart card in the user's mobile equipment) and the merchant (payment terminal, e.g. point-of-sale). In traditional credit card payment, the card is often , handed over to the merchant, who can read all the information on the card and potentially misuse it. In the inventive approach, the card is plugged into the personal mobile station of the user and only payment information related to the current purchase is revealed to the merchant. Another advantage is that, while in traditional credit card systems billing is performed by banks and credit card companies, in the invention, anybody can become a billing service provider, in particular any telco who has competency in billing and reputation (which usually means trust).

According to an aspect of the invention, a new unique transaction identification and the terminal name is displayed on the display of said terminal or of the mobile equipment, and entered by the user on the input means of the other of one of said payment terminals or mobile equipments. The terminal name and transaction id is used for establishing a secure channel between the mobile equipment and the payment terminal.

According to another aspect of the invention, the secure channel that is established is an authentic channel. This means that the communication parties can be sure that if they receive a message on this channel, then it comes from the other party, and it is not a fake message sent by an attacker. The protocol can also be used to prevent eavesdropping (i.e. to establish an authentic and a confidential channel).

According to another aspect of the invention, the user has a smart card and a personal mobile equipment, in which the smart card can be inserted, and which has short distance wireless communication capabilities. The inventive method would, however, work as well if the user has a personal digital assistant (PDA) which has short distance wireless communication capabilities. Thus, there is no real need for smart cards. A PDA can replace the smart card, because it can assist the user by performing cryptographic operations just as the smart card does.

According to another aspect of the invention, the problems of the prior art are solved by a method for transmitting payment information between a mobile station and a payment terminal (11) over a short distance wireless interface (101), comprising:

- displaying an identification on the display (110) of said payment terminal (11),
- manually entering said identification on the input means (103) of said mobile station,
- using said identification in a first message for starting the establishment of an authentic and confidential channel between said mobile station and said payment terminal (11),

    said channel being used for exchanging confidential payment information between said payment terminal and said mobile station.

An important characteristic of an electronic payment system is whether it is online or offline. In an online payment system, the merchant contacts the bank of the user at each purchase in order to verify the solvency of the user. In an offline payment system, the bank is contacted only offline (e.g., once each day) in order to update the charging information of the user. Online systems are used for high value payments and when the merchant does not trust the user. For low value payments and when the merchant trusts the user, offline systems are more efficient. The inventive solution can be used with both types of applications, and let the merchant choose whether online verification of solvency is necessary or not.

The invention will be better understood with the help of the following description, given as an example, and illustrated by the figure which show:

Figure 1 illustrates the principals and the channels of a system including a smart card inserted in a mobile phone or PDA, a payment terminal and a billing server.

Figure 2 illustrates the messages which are exchanged between two partners according to the ISO/IEC 9798-3 protocol.

Figure 3 illustrates the messages and keys which are exchanged between two partners in a modification of the ISO/IEC 9798-3 protocol.

Figure 4 illustrates the messages which are exchanged for authorizing a money transfer.

Figure 5 illustrates the messages which are exchanged between the principals over the various channels in a preferred embodiment of the invention.

Principals, channels, and goals

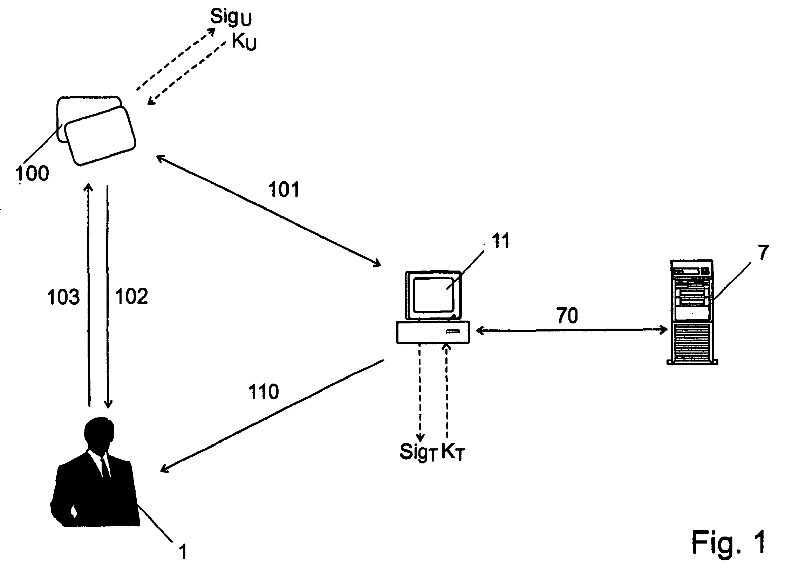

Figure 1 illustrates the principals and the channels among them.
The principals are:

■  U: the mobile user 1

■  C: her smart card 100, e.g. a SIM-card (subscriber identification card), WIM card (WAP identification card) or UIM-card (UMTS identification card). The smart card is introduced or may be a part of a mobile equipment, e.g. a mobile phone or a PDA (not shown). The mobile equipment including the smart card is called the mobile station.

■  T: the payment terminal 11 (point-of-sale) of the merchant.

■  S: the billing server 7, which may be operated by the operator of the mobile network or by a third instance.

The physical channels are:

■  *md*: the display 102 of the mobile equipment containing the card (C → U)

■  *mk*: the keypad 103 of the mobile equipment containing the card (U → C)

■  *td*: the display 110 of the payment terminal 11 (T → U)

■  *wl*: the wireless link 101 between the smart card 100 inserted in the mobile equipment and the payment terminal 11 (C ↔ T)

■  *net*: the fixed network 70 between the payment terminal 11 and the billing server 7 (T ↔ S)

The logical channels are:

■  $Sig_U$: the channel realized by the digital signature with the private key of the user 1.

■  $K_U$: the channel implemented by the encryption with the public key of the user 1.

■  $Sig_T$: the channel realized by the digital signature with the private key of the payment terminal 11.

■  $K_T$: the channel implemented by the encryption with the public key of the payment terminal 11.

Since normally the user 1 cannot use the keyboard of the merchant's payment terminal 11, there is no direct physical channel from the user to the terminal 11.
We make the following assumptions about the channels:

•  The display 102 *md* of the mobile equipment is authentic and timely. Authenticity means that if the mobile equipment shows a message and states that this message comes from the smart card 100, then indeed the message comes from the smart card 100. Timeliness means that the mobile equipment does not maliciously delay messages originating from the smart card 100, but displays them as the card generates them. This, of course, means that the mobile equipment is trusted: the user believes that it has not been tampered by anybody and that it behaves correctly.

- The keypad 103 *mk* of the mobile equipment is authentic and timely. We assume that only the user 1 of the smart card 100 can send messages to the smart card via the keypad 103 of the mobile equipment. Requiring the user 1 to enter the PIN assigned to the smart card 100 when the card is inserted in the mobile equipment or before starting a payment transaction can ensure this. Furthermore, we assume that the mobile equipment does not maliciously delay the input from the user 1, but delivers it to the card 100 as the user enters it.

- The terminal display 110 *td* is authentic and timely. This means that messages displayed on the screen 110 of the terminal 11 originates from the terminal and at the time at which they are displayed.

- The wireless link 101 *wl* between the mobile equipment and the fixed terminal 11 is insecure. We assume that passive attacks (eavesdropping) and active attacks (message modification, generation and replay) are possible on the wireless link between the mobile station and the terminal.

- $Sig_U$ is an authentic channel from the smart card 100, because only the smart card knows the private key of the user 1; thus, one can be sure that messages that are signed with this private key originate from the smart card 100.

- $K_U$ is a confidential channel to the smart card 100, because only the smart card can decrypt messages that are encrypted with the public key of the user 1. Note that neither $Sig_U$ nor $K_U$ is a timely channel, because neither the digital signature nor the encryption alone provides any freshness guarantees.

- *net* is secure. We assume that the payment terminal 11 and the billing server 7 have the means to authenticate each other and communicate securely via the network. This protection can be based on other known cryptographic protocols and mechanisms that are not addressed in this description.

- $Sig_T$ is an authentic channel from the payment terminal 11, because only the terminal can generate messages that are signed with the private key of the terminal.

- $K_T$ is a confidential channel to the terminal, because only the terminal can decrypt messages that are encrypted with the public key of the terminal.

An objective of the invention is to find a protocol that establishes an authentic and confidential (in order to hide payment information from eavesdroppers) logical channel between the terminal 11 and the smart card 100, and further to the billing center 7, using only the already existing physical and logical channels described above, and to find a payment protocol, in which the user 1 authorizes the billing server 7 to pay the merchant for the goods or services provided and to charge the corresponding amount to her billing account.

The extended ISO/IEC 9798-3 protocol

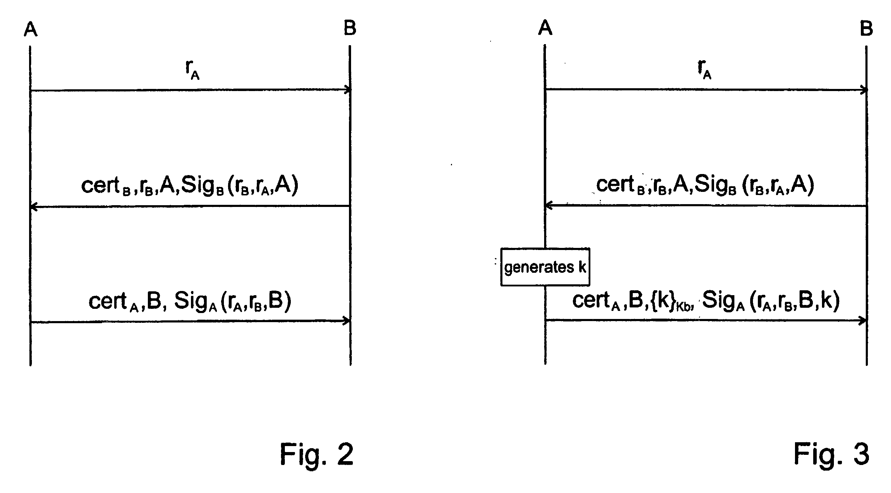

Figure 2 shows the standardized ISO/IEC 9798-3 mutual authentication protocol. Figure 3 shows an inventive extension of this protocol with key establishment functions. The ISO/IEC 9798-3 protocol is based on public key cryptography, and assumes that both participating entities A, B have a public key certificate. This is consistent with our assumptions about the existing channels between the smart card and the terminal.

The ISO/IEC 9798-3 mutual authentication protocol is illustrated in Figure 2:

$$A \rightarrow B: r_A$$

The initiator of the protocol A generates a fresh random number $r_a$, and sends it to the responder B.

$$B \rightarrow A : cert_B, r_B, A, Sig_b(r_B, r_A, A)$$

B also generates a fresh random number $r_B$, and digitally signs $r_B$, $r_A$ and A (the identifier of A). Then it sends a message to A which contains the public key certificate $cert_B$ of B, the random number $r_b$, the identifier of A, and the digital signature $Sig_B(r_B, r_A, A)$. Upon receiving this message, A verifies the certificate and the digital signature of B. If the verifications are successful, then B is authenticated. The rationale is that a valid signature can only be generated by someone who knows the appropriate private key (i.e., B), and the data, on which the signature has been generated, is fresh (because it contains the random number $r_A$).

$$A \rightarrow B : cert_A, B, Sig_A(r_A, r_B, B)$$

A then digitally signs $r_A$, $r_B$ and *B,* and sends a message to B which contains the public key certificate of A, the identifier of B, and the digital signature $Sig_a(r_A, r_B, B)$. Upon receiving this message, B verifies the certificate and the digital signature of A. If the verifications are successful, then A is authenticated for similar reasons as before.

In order to extend this protocol with key establishment functions, we modify only the last message of the protocol. Before sending the last message, A randomly generates a symmetric session key *k*, and encrypts it with the public key $K_b$ of B. Only the responder B will be able to decrypt this encryption. A then digitally signs the random numbers $r_A$ and $r_B$, the identifier of B, and the session key *k*. When receiving this message, B first decrypts the encrypted part, and then verifies the certificate and the signature of A. If the verifications are successful, then A is authenticated. Furthermore, A and B established a shared secret key *k*, which represents an authentic and confidential channel between them. The modified protocol is illustrated in Figure 3.

If the signature operation is such that it reveals the data which is signed, then we require that first a cryptographic hash value is computed from the data, and then this hash value is signed with the signature operation. In this way, *k* is not revealed to eavesdroppers.

The payment protocol

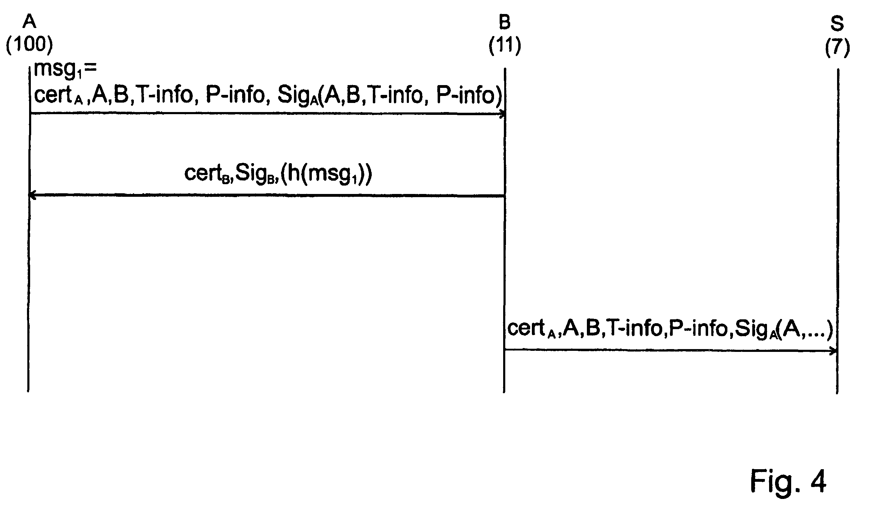

The design of a payment protocol is based on the observation that payment is equivalent with authentication if money is represented by accounts. This means that, in the inventive payment protocol, the payment will be an authentic statement of the payer (i.e., the user), which says that she is willing to transfer a given amount from her account to the account of the payee (i.e., the merchant). The authenticity of the statement is verified by the payee, as well as the entity that handles the accounts (i.e., the billing server). The protocol is illustrated in Figure 4 and described as follows:

$$msg1: A \rightarrow B : cert_A, A, B, \textit{T-info}, \textit{P-info}, Sig_A(A, B, \textit{T-info}, \textit{P-info})$$

The payer (user's smart card 100) A digitally signs her identifier A, the identifier B of the payee B (payment terminal 11), the transaction information *T-info*, and the payment information *P-info*. It is not specified explicitly what *T-info* and *P-info* are. Typically, *T-info* contains a unique transaction identifier, the identifier of the service that has been provided, the date and the time of the provision, the unit price, etc. *P-info* contains the identifier of the billing server, the amount to be paid, an expiry date until which the payee must present this message to the billing server, etc. Upon receiving the first message, B verifies the certificate and the digital signature of A.

$$msg2: B \rightarrow A: cert_B, Sig_B(h(msg_1))$$

B generates a receipt of payment by computing a cryptographic hash value $h(msg_1)$ of the first message, and generating a digital signature on the result. He then sends his certificate and the signature to A.

$$msg3: B \rightarrow S : cert_A, A, B, \textit{T-info}, \textit{P-info}, Sig_A(A, B, \textit{T-info}, \textit{P-info})$$

Finally, B contacts the billing server S (7), and sends the first message (i.e., A's statement that she is willing to pay) to it. S verifies the signature and checks that this payment has not been processed before. Then it transfers the appropriate amount to B and updates the billing account of A. S logs the payment into an internal database for further verification purposes.

Integrated solution - payment via the short distance wireless interface

Protocol description

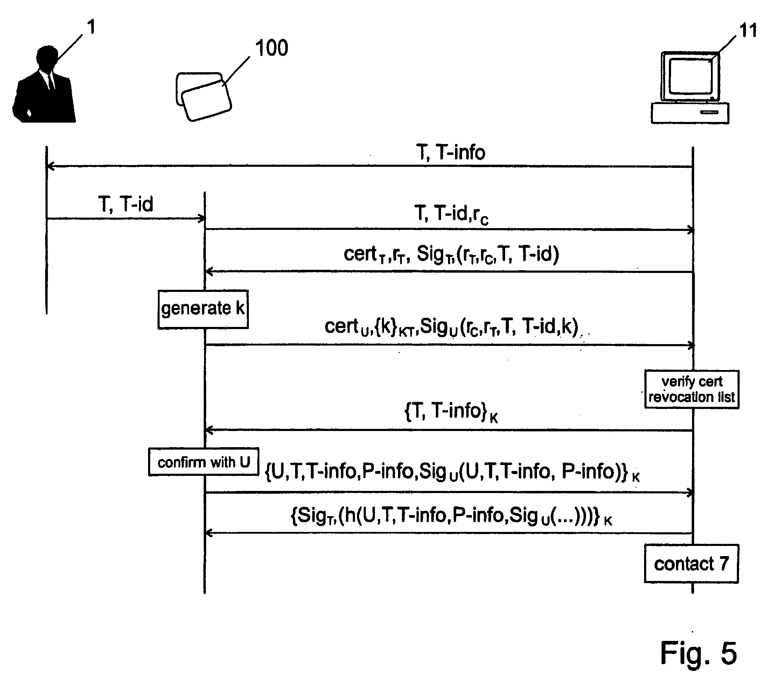

Putting the extended ISO/IEC 9798-3 protocol and the payment protocol above together we get the following solution which is illustrated in Figure 5:

$$T \rightarrow U : T, \text{ } T\text{-}info$$

The payment terminal T (11) displays the identifier $T$ of the terminal and the transaction information $T\text{-}info$ on the display 102 of the terminal. The transaction information contains a unique (at least with respect to this terminal) transaction identifier $T\text{-}id$, the identifier of the service provided, the date and the time of the provision, the price, etc.

$$U \rightarrow C : T, \text{ } T\text{-}id$$

The user U (1) types in the identifier of the terminal $T$ and the transaction identifier $T\text{-}id$ on the keypad 103 of the mobile equipment, which sends this information to the smart card C (100).

$$C \rightarrow T : T, \text{ } T\text{-}id, r_C$$

The smart card 100 generates a first fresh random number $r_C$, and sends it to the payment terminal 11 together with $T$ and $T\text{-}id$ via the wireless link 101. The terminal 11 may receive several messages from other terminals 11 and smart cards 100 that are in its communication range while waiting for this message from the smart card. It handles only the message that contains its identifier $T$ and the valid transaction identifier $T\text{-}id$. All other messages are discarded.

$$T \rightarrow C : cert_T, \text{ } r_T, \text{ } Sig_T(r_T, r_C, \text{ } T, \text{ } T\text{-}id)$$

The payment terminal 11 generates a second fresh random number $r_T$. It signs the random number of the smart card $r_C$, together with its own random number $r_T$, its identifier $T$, and the transaction identifier $T\text{-}id$. It then sends its certificate $cert_T$, its random number $r_T$, and the digital signature to the smart card 100. The smart card verifies the certificate and the signature of the terminal. Besides having a valid signature on it, the certificate should contain the terminal identifier $T$ that has been typed in by the user on the keypad of the mobile equipment. If the verifications are all successful, then the payment terminal 11 is authenticated.

$$C \rightarrow T : cert_U, \text{ } \{k\}_{KT}, \text{ } Sig_U(r_C, \text{ } r_T, \text{ } T, \text{ } T\text{-}id, \text{ } k)$$

The smart card 100 generates a random symmetric key $k$ and encrypts it with the public key $K_T$ of the payment terminal 11. This public key is obtained from the certificate of the terminal. The smart card 100 signs the random numbers $r_T$ and $r_C$, the identifiers $T$ and $T\text{-}id$, and the freshly generated symmetric key $k$. Then it sends the certificate of the user $cert_U$, the encrypted symmetric key and the digital signature to the terminal. If the signature does not hide the data that is signed, then in a variant embodiment the signed data is hashed with a cryptographic hash function before being signed. The terminal decrypts the encrypted part and verifies the certificate and the signature of the smart card 100. If the verifications are successful, then the user's smart card is authenticated to the terminal. Furthermore, the smart card and the payment terminal established a shared symmetric session key $k$.

$$T \rightarrow C : \{T, \text{ } T\text{-}info\}_k$$

The payment terminal 11 sends its identifier and the transaction information, which has been displayed to the user on the display 110 of the payment terminal 11, to the smart card 100. This messages is encrypted with the shared session key $k$. Since only the payment terminal 11 knows this key (apart from the smart card 100, of course), the smart card believes that this message is sent by the terminal.

$$C \rightarrow U : T, \text{ } T\text{-}info$$

The smart card 100 displays the received information on the display 102 of the mobile equipment. The user 1 verifies it and compares it to the information that is displayed by the payment terminal 11 on its display 110.

$$U \to C : \textit{confirmation}$$

If the information displayed by the mobile equipment matches the information displayed by the terminal 11, then the user 1 confirms (e.g., she pushes the OK button on the mobile equipment).

$$C \to T : \{ U, T, \textit{T-info, P-info, Sig}_U(U, T, \textit{T-info, P-info})\}_k$$

The smart card 100 generates the payment message, which contains the identifiers of the user and the merchant's payment terminal, the transaction information, and the payment information, and it is digitally signed by the smart card 100 with the private key of the user. If the signature does not hide the data that is signed, then we require that first the data is hashed with a cryptographic hash function, and the hash value is signed with the private key of the user. The payment message is encrypted with the session key k, and sent to the terminal. This encryption hides the payment information from attackers. Upon receiving this message, the terminal 11 decrypts it, and verifies the digital signature.

$$T \to S : \textit{verification}$$

If the merchant does not trust the user 1 or the payment is a high-value payment, then the terminal 11 can now contact the billing server 7, or a certification revocation list server, to check the solvency of the user 1 (online solvency check).

$$T \to C : \{Sig_T(h(U, T, \textit{T-info, P-info, Sig}_U(U, T, \textit{T-info, P-info})))\}_k$$

The terminal 11 generates a payment receipt by computing the cryptographic hash value of the payment message (without the encryption) using some publicly known cryptographic hash function *h*, and signing the hash value. The payment receipt is encrypted with the session key *k*, and sent to the smart card 100.

$$T \to S : \textit{cert}_U, U, T, \textit{T-info, P-info, Sig}_U(U, T, \textit{T-info, P-info})$$

Finally, the terminal 11 contacts the billing server 7, and presents the payment message received from the user 1. This message is sent via a channel 70 (*net*), the security of.which is provided by means outside of the scope of this report. The billing server 7 verifies the certificate and the signature of the user. It then checks that this payment has not been processed before by looking up its internal log database. If the verifications are successful, then the billing server transfers the appropriate amount to the merchant and updates the billing account of the user. It also logs the transaction into its internal log database.

Certificate management

Public key infrastructure

The method preferably uses an underlying public key infrastructure. Public key certificates may be issued by certification authorities (CAs), which may be hierarchically organized. Revoked certificates may be listed on a certificate revocation list (CRL).
In a preferred embodiment, we use the following scheme:

■  for high value payments, the user checks the certificate of the merchant against the CRL;

■  for low value payments, the user does not perform any revocation checks;

■  for high value payments and for low value payments in case the merchant does not trust the user, the merchant checks the user's certificate against the online CRL via the fixed network;

■  for low value payments in case the merchant trusts the user, the merchant checks its local copy of the CRL that it updates regularly from the online CRL server.

Achievements

The terminal 11 (the smart card 100) believes that the smart card 100 (the terminal 11) has recently sent a message (repeated its random number), which means that both should be present (authentication). The smart card and the terminal believe that $k$ is a shared secret key between them (key establishment). The terminal 11 and the billing server 7 believe that the user 1 authorized the payment. There is a subtle difference: the terminal 11 believes that the user's authorization is fresh (since it arrives encrypted with the fresh secret key), but the billing server 7 cannot be sure about the freshness of this authorization. That is why we require the server 7 to look at its internal log database and check that this authorization has never been processed before.

Conclusion

In this section, we presented a payment protocol that can be used to perform electronic payments over a short distance wireless interface. The protocol has two phases: (1) it establishes an authentic and confidential channel between the smart card of the user and the payment terminal of the merchant, and (2) it provides the means to authorize transfer of money from the account of the user to the account of the merchant. Accounts are managed by a trusted third party, which is called billing server.

Implementation guidelines

The wireless link 101 between the smart card 100 in the user's equipment and the terminal 11 can be based on radio or infrared communications. We assumed the existence of an appropriate addressing scheme, which makes it possible to send a message directly to an intended receiver if its address is known, and an appropriate MAC (Multiple Access Channel) algorithm, which governs access to the shared radio channel. We did not assume, however, that a party knows the MAC address of another party when beginning a transaction with it. We designed the protocol in a way that it can perform address resolution functions seamlessly. For this reason, the first message that is sent over the wireless link 101 is a broadcast message, which is received by every payment terminal 11 within the communication range of the user's 1 mobile equipment. This first message always contains enough information for a receiver 11 to decide whether it has to take care of it, or whether it is a message for someone else. The intended receiver can, thus, recognize which broadcast message is sent to it and respond to it. Since the broadcast message can contain the MAC address of the sender, the receiver can send the response directly to the sender. The response can also contain the MAC address of its sender (the MAC address of the intended receiver of the broadcast message). Thus, after the first message exchange, both communicating parties know the address of the other and can send messages directly to each other.
The protocol may be implemented with software in the terminal 11 and in the smart card 100 implemented with current cryptographic libraries. On the terminal side an example is the ABA JCE library, which is a pure java implementation of the JCE (Java Cryptography Extension) interface defined by Sun Microsystems Inc. On the smart card side an example is an implementation of the Java Card interface.

Random number generation

Both the smart card 100 and the payment terminal 11 must generate fresh random numbers. These numbers should be generated by the pseudo-random number generator (PRNG) available in the cryptographic library. This PRNG is represented by the SecureRandom class, which is part of the JCE interface. As the security of the method depends on the quality of the random number, seeding of the PRNG must be solved carefully.
Seeding the PRNG may be a problem on the smart card, because multi-threading is not allowed on most cards (i.e., self-seeding cannot be used) and capturing random events does not seem to be easy either. One solution can be that the mobile equipment creates the seed possibly using random events generated by the user.

Choice of the asymmetric key scheme

This choice is determined by the number of public and private key operations performed by the smart card. The smart card 100 performs 1 public key encryption, 3 digital signature verifications, and 2 digital signature generations. This means 4 public key and 2 private key operations. Therefore, we suggest a scheme in which public key operations require less computation than private key operations. Such a scheme is RSA, which can be used for both encryption and digital signature, and which is available in the cryptographic library. For digital signature, we suggest to use MD5 with RSA, which hides the data that is signed.

Choice of the symmetric key encryption algorithm

The protocol uses symmetric key encryption to protect payment information from eavesdroppers. Any kind of block cipher algorithm can be used for this purpose. We suggest to use IDEA in CBC mode.

We will now describe an example of the pseudo-code which may be run by the computing means in the smart card 100 and by the payment terminal 11 in order to carry out this payment protocol. The one skilled in the art will be able to write the necessary modules in the smart card and in the terminal 11 which correspond to those pseudo-codes.

Pseudo-code run by the smart card 100

One time setup: initialize the PRNG with a truly random seed

1. Input the terminal ID and the transaction ID on the keyboard 103 of the mobile equipment: $T$, $T\text{-}id$

2. Get next random from the PRNG: $r_C$

3. Broadcast $T$, $T\text{-}id$, $r_C$

4. Listen on the wireless interface 101 until a message arrives: $M2$

5. If $M2 = cert, r, sig$ ($M2$ has the right format), then go to step 6, else listen further on the wireless interface until a message M2 with the expected format arrives. If a timeout occurs before M2 has been received, raise an exception and stop.

6. If $cert$ is the certificate of $T$ and it is correct, then go to step 7 else listen further on the wireless interface until a message M2 with a correct certificates arrives. If a timeout occurs before M2 has been received, raise an exception and stop.

7. If $sig = Sig_T(r_T, r_C, T, T\text{-}id)$, then go to step 8, else listen further on the wireless interface until a message M2 with a correct signature arrives. If a timeout occurs before M2 has been received, raise an exception and stop.

8. Get next random from the PRNG: k

9. Extract the public key from $cert$: $K_T$

10. Encrypt $k$ with $K_T$: $\{k\}_{KT}$

11. Sign $r_C$, $r$, $T$, $T\text{-}id$, $k$ : $Sig_U(r_C, r_T, T, T\text{-}id, k)$

12. Send $cert_U$, $\{k\}_{KT}$, $Sig_U(r_C, r_T, T, T\text{-}id, k)$ to the sender of $M2$

13. Listen on the wireless interface 101 until a message arrives: $M4$

14. Try to decrypt $M4$ with $k$: $P4$

15. If $P4 = T$, $T\text{-}info$, then go to step 16, else listen further on the wireless interface until a message M4 with the expected format arrives. If a timeout occurs before M4 has been received, raise an exception and stop

16. Display $T$, $T\text{-}info$ on the display 102 of the mobile equipment

17. Wait until the user 1 responds on the keypad 103: $resp$

18. If $resp$ = yes then go to step 19, else go to step 25

19. Sign $U$, $T$, $T\text{-}info$, $P\text{-}info$: $Sig_U(U, T, T\text{-}info, P\text{-}info)$

20. Encrypt $P5 = U, T, T\text{-}info, P\text{-}info, Sig_U(U, T, T\text{-}info, P\text{-}info)$ with $k$

21. Send $\{U, T, T\text{-}info, P\text{-}info, Sig_U(U, T, T\text{-}info, P\text{-}info)\}_k$ to the sender of $M4$

22. Listen on the wireless interface 101 until a message arrives: $M6$

23. Try to decrypt $M6$ with $k$: $P6$

24. If $P6 = Sig_T(h(P5))$, then store $P6$ and go to step 25, else listen further on the wireless interface until a message M6 with the expected format arrives. If a timeout occurs before M6 has been received, raise an exception and stop.

25. End of protocol

Pseudo-code run by the payment terminal 11

One time setup: initialize the PRNG with a truly random seed

1. Display the terminal ID and the transaction information on the display 110

2. Listen on the wireless interface 101 until a broadcast message arrives: $M1$

3. If $M1 = T, T\text{-}id, r$, where $T$ is the terminal ID and $T\text{-}id$ is the current transaction ID, then go to step 4, else go to step 2

4. Get next random from the PRNG: $r_T$

5. Sign $r_T, r_C, T, T\text{-}id$ : $Sig_T(r_T, r, T, T\text{-}id)$

6. Send $cert_T, r_T, Sig_T(r_T, r_C, T, T\text{-}id)$ to the sender of $M1$

7. Listen on the wireless interface 101 until a message arrives: $M3$

8. If $M3 = cert, C, sig$ ($M3$ has the right format), then go to step 9, else listen further on the wireless interface until a message M3 with the expected format arrives. If a timeout occurs before M3 has been received, raise an exception and stop.

9. If $cert$ is correct, then go to step 10, else listen further on the wireless interface until a message M3 with a correct certificate arrives. If a timeout occurs before M3 has been received, raise an exception and stop.

10. Decrypt C with the private key of the payment terminal 11: $k$

11. If $sig = Sig_U(r, r_T, T, T\text{-}id, k)$, then go to step 12, else listen further on the wireless interface until a message M3 with a correct signature arrives. If a timeout occurs before M3 has been received, raise an exception and stop.

12. Encrypt the terminal ID and the transaction information with $k$: $\{T, T\text{-}info\}_k$

13. Send $\{T, T\text{-}info\}_k$ to the sender of $M3$

14. Listen on the wireless interface 101 until a message arrives: $M5$

15. Try to decrypt $M5$ with $k$: $P5$

16. If $P5 = U, T, T\text{-}info, P\text{-}info, sig$, then go to step 17, else listen further on the wireless interface until a message M5 with the expected format arrives. If a timeout occurs before M5 has been received, raise an exception and stop.

18. If $sig = Sig_U(U, T, T\text{-}info, P\text{-}info)$, then go to step 19, else listen further on the wireless interface until a message M5 with the a correct signature arrives. If a timeout occurs before M5 has been received, raise an exception and stop.

19. Check solvency of user by contacting the billing server 7 if necessary.

20. Compute the hash of *P5* and sign it: $Sig_T(h(P5))$

21. Encrypt the signature with *k* :$\{Sig_T(h(P5))\}_k$

22. Send $\{Sig_T(h(P5))\}_k$ to the sender of *M5*

23. End of protocol

offline : Send cert$_U$, U, T, T-info, P-info, Sig$_U$(U, T, T-info, P-info) to the billing server.

In the described embodiment, an authentic and confidential channel is established between the user's mobile equipment and the payment terminal by first displaying the terminal name and a new unique transaction id on the display of the payment terminal and then entering manually the terminal name and the transaction id on the keypad of the mobile equipment. The one skilled in the art will however understand that, when the user has access to the keyboard or other input means of the payment terminal, an authentic and confidential channel can be built by displaying the unique transaction id on the display of the mobile equipment and then entering manually the mobile id and transaction id in the payment terminal.

Although the embodiments of the invention described with reference to the drawings comprise equipments such as terminals, smart cards and mobile equipments, and methods performed in or by such equipments, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the methods and protocols according to the invention. The carrier may be any entity or device capable of carrying the program.

For example, the carrier may comprise a storage medium, such as a ROM, for example a CD-ROM or a semiconductor ROM, for example an EEPROM, or a magnetic or optical recoding medium, for example a floppy disc, hard disk or smart card. Further, the carrier may be a transmissible carrier such as an electrical or optical signal which may be conveyed via electrical or optical cable or by radio or other means.

When the program is embodied in a signal which may be conveyed by a cable or other device or means, the carrier may be constituted by such cable or other device or means. Alternatively, the carrier may be an integrated circuit in which the program is embedded, for example a memory in the terminal 11, in the mobile equipment or in the smart card 100.

**Claims**

1. Method for transmitting payment information between a mobile equipment and a payment terminal (11) over a short distance wireless interface (101), comprising:

   - displaying an identification on the display (110) of said payment terminal (11),
   - manually entering said identification on the input means (103) of said mobile equipment,
   - using said identification in a first message (M1) for starting the establishment of an authentic and confidential channel between said mobile equipment and said payment terminal (11)

   said channel being used for exchanging confidential payment information between said payment terminal and said mobile equipment.

2. Method according to claim 1, said identification being used for verifying an electronic certificate subsequently sent by said payment terminal.

3. Method according to the preceding claim, wherein said identification comprises the payment terminal name and/or a transaction id

4. Method according to the preceding claim, wherein said transaction id (T-id) is generated in said payment terminal (11), said first message identified with said transaction id comprising a first random number ($r_C$), said first random number assuring freshness in a mutual authentication exchange between said mobile equipment and said payment terminal (11) for exchanging an authenticated symmetric session key (k), said key being used for encrypting said payment information.

**5.** Method according to the preceding claim, further comprising:

- preparing in said payment terminal (11) a second message (M2) containing said transaction identifier (T-id) and a terminal random number ($r_T$), and signing it with the payment terminal private key ($Sig_T$),
- sending this message to said mobile equipment over said wireless interface (101),
- verifying in said mobile equipment said transaction identifier (T-id) and the signature ($Sig_T$) of said payment terminal (11) with said identification ,
- using said terminal random number ($r_T$) for verifying the freshness of at least one subsequent message from said mobile equipment to said payment terminal (11).

**6.** Method according to the preceding claim, wherein said subsequent message authenticated with said terminal random number ($r_T$) comprises said symmetric session key (k).

**7.** Method according to one of the claims 5 or 6, wherein said message sent by said payment terminal further comprises said first random number ($r_C$) generated in said mobile equipment.

**8.** Method according to one of the preceding claims, further comprising a step of verifying the public key of the user with a user revocation list.

**9.** Method according to claim 1, wherein said authentic and confidential channel is established with the following steps:

- generating in said mobile equipment a first random word ($r_C$),
- sending said first random word ($r_C$) to said payment terminal,
- generating in said payment terminal (11) a second random word ($r_T$),
- generating in said payment terminal (11) a first signature of said first random word, of said second random word, of the identifier of said payment terminal (T) and of the transaction id (T-id)
- sending to said mobile equipment a certificate of said terminal ($cert_T$), said second random word ($r_T$) and said first signature,
- generating in said mobile equipment a session key (k) and encrypting it with the public key of said terminal ($k_T$),
- generating in said mobile equipment a second signature of said first random word ($r_C$), of said second random word ($r_T$), of the identifier of said terminal (T), of the transaction identifier (T-id) and of said session key (k),
- sending said encrypted session key, said second signature and a user certificate ($cert_U$) to said terminal,
- decrypting said session key in said payment terminal (11),
- verifying in said payment terminal said certificate and the signature of the user,
- if the verifications are successful, using said session key (k) as a shared symmetric session key for securing ulterior messages between said mobile equipment and said payment terminal (11).

**10.** Smart card (100) having thereon a computer program comprising instructions to be executed by processing means in said smart card for causing the smart card to perform a process comprising at least the following steps:

- waiting for an identification (for example T, T-id) to be displayed by a payment terminal and, thereafter, to be manually entered in the mobile equipment containing the smart card and transmitted to the smart card,
- preparing an instruction for sending a first message (M1) containing said identification over a short distance wireless interface (101),
- waiting for a second message (M2) received over said wireless interface,
- verifying if a certificate ($cert_T$) contained in said second message contains said identification (T).

**11.** Smart card according to the preceding claim, wherein said second message (M2) further comprises a first random number ($r_C$) used for verifying the freshness of subsequent received messages.

**12.** Smart card according to the preceding claim, wherein said process further comprises:

- generating a random session key (k),
- encrypting said session key with the payment terminal public key contained in said payment terminal certificate,
- preparing an instruction for sending a third message (M3) comprising said encrypted session key over said short distance wireless interface.

**13.** Smart card according to the preceding claim, said third message further comprising a certificate ($cert_U$) of the user of said smart card.

**14.** Smart card according to the preceding claim, said third message (M3) further comprising a signature of said answer.

**15.** Smart card according to one of the claims 10 to 14, further comprising a GSM-part.

**16.** A computer program on a carrier and comprising computer executable instructions for causing a terminal (11) including a short distance wireless interface (101) to execute a process comprising the following steps:

- generating a transaction identifier (T-id),
- displaying said transaction identifier,
- waiting for a first message (M1) comprising said transaction identifier (T-id) over said short distance wireless interface,
- sending a second message (M2) containing a certificate of said terminal to the sender of said answer (M1).

**17.** Computer program on a carrier according to the preceding claim, said process further comprising:

- extracting a first random number ($r_C$) from said first message (M1),
- using said first random number in a mutual authentication exchange over said short distance wireless interface,
- extracting an authenticated symmetric session key (k) from a subsequent message, said key being used for encrypting payment orders exchanged over said short distance wireless interface.

**18.** Computer program on a carrier according to the preceding claim, wherein said second message (M2) further comprises a second random number ($r_T$) said first random number ($r_C$), said second random number ($r_T$) and said transaction identifier (T-id), said second message being signed.

**19.** Computer program on a carrier according to one of the claims 16 to 18, wherein said process further comprises:

- sending payment information exchanged with said sender to a billing server (7).

**Patentansprüche**

**1.** Verfahren zur Übertragung einer Zahlungsinformation zwischen einer mobilen Vorrichtung und einem Zahlungsendgerät (11) über eine drahtlose Schnittstelle im Nahbereich (101), umfassend:

- das Anzeigen einer Identifizierung auf der Anzeige (110) des besagten Zahlungsendgerätes (11),
- das manuelle Eingeben besagter Identifizierung auf den Eingabemitteln (103) der besagten mobilen Vorrichtung,
- das Verwenden besagter Identifizierung in einer ersten Meldung (M1), um einen authentischen und vertraulichen Kanal zwischen besagter mobilen Vorrichtung und besagtem Zahlungsendgerät (11) aufzubauen,

  wobei besagter Kanal dadurch verwendet wird, um vertrauliche Zahlungsinformation zwischen besagtem Zahlungsendgerät und besagter mobilen Vorrichtung auszutauschen.

**2.** Verfahren gemäss Anspruch 1, wobei besagte Identifizierung benutzt wird, um ein von besagtem Zahlungsendgerät später gesandtes elektronisches Zertifikat zu überprüfen.

**3.** Verfahren gemäss dem vorhergehenden Anspruch, worin besagte Identifizierung den Namen des Zahlungsendgerätes und/oder eine Transaktionsidentifikation umfasst.

**4.** Verfahren gemäss dem vorhergehenden Anspruch, worin besagte Transaktionsidentifikation (T-id) im besagten Zahlungsendgerät (11) erzeugt wird, wobei besagte erste mit besagter Transaktionsidentifikation identifizierte Meldung eine erste Zufallszahl ($r_C$) umfasst, wobei besagte erste Zufallszahl die Ungebrauchtheit in einem gegenseitigen Authentifizierungsaustausch zwischen besagter mobilen Vorrichtung und besagtem Zahlungsendgerät (11) gewährleistet, um einen authentifizierten symmetrischen Sitzungsschlüssel (k) auszutauschen, wobei besagter Schlüssel für die Verschlüsselung besagter Zahlungsinformation verwendet wird.

**5.** Verfahren gemäss dem vorhergehenden Anspruch, ferner umfassend:

- das Vorbereiten im besagten Zahlungsendgerät (11) einer zweiten Meldung (M2), welche die besagte Transaktionsidentifikation (T-id) und eine Endgerätzufallszahl ($r_T$) beinhaltet, und das Signieren derselben mit dem privaten Schlüssel des Zahlungsendgerätes ($Sig_T$),
- das Senden dieser Meldung an besagte mobile Vorrichtung über besagte drahtlose Schnittstelle im Nahbereich (101),
- das Überprüfen in besagter mobilen Vorrichtung der besagten Transaktionsidentifikation (T-id) und der Signatur ($Sig_T$) des besagten Zahlungsendgerätes (11) mit besagter Identifizierung,
- das Benutzen besagter Endgerätzufallszahl ($r_T$) zur Überprüfung der Ungebrauchtheit von mindestens einer nachfolgenden Meldung aus besagter mobilen Vorrichtung an besagtes Zahlungsendgerät (11).

**6.** Verfahren gemäss dem vorhergehenden Anspruch, worin besagte nachfolgende Meldung, die mit besagter Endgerätzufallszahl ($r_T$) authentifiziert ist, den besagten symmetrischen Sitzungsschlüssel (k) umfasst.

**7.** Verfahren gemäss einem der Ansprüche 5 oder 6, worin besagte von besagter Zahlungsvorrichtung gesandte Meldung ferner besagte erste in besagter mobilen Vorrichtung erzeugte Zufallszahl ($r_C$) umfasst.

**8.** Verfahren gemäss einem der vorhergehenden Ansprüche, ferner umfassend einen Schritt, während welchem der öffentliche Schlüssel des Benutzers mit einer Benutzerwiderrufsliste überprüft wird.

**9.** Verfahren gemäss Anspruch 1, worin besagter authentischer und vertraulicher Kanal mit den folgenden Schritten aufgebaut wird:

- das Erzeugen in besagter mobilen Vorrichtung eines ersten Zufallsworts ($r_C$),
- das Senden eines ersten Zufallsworts ($r_C$) an besagtes Zahlungsendgerät,
- das Erzeugen im besagten Zahlungsendgerät (11) eines zweiten Zufallsworts ($r_T$),
- das Erzeugen im besagten zweiten Zahlungsendgerät (11) einer ersten Signatur des besagten ersten Zufallsworts, des besagten zweiten Zufallsworts, der Identifikation besagtes zweiten Zahlungsendgerätes (T) und der Transaktionsidentifikation (T-id),
- das Senden an besagte mobile Vorrichtung eines Zertifikats des besagten Endgerätes ($cert_T$), des besagten zweiten Zufallsworts ($r_T$) und der besagten ersten Signatur,
- das Erzeugen in besagter mobilen Vorrichtung eines Sitzungsschlüssels (k) und das Verschlüsseln desselben mit dem öffentlichen Schlüssel des besagten Endgerätes ($k_T$),
- das Erzeugen in besagter mobilen Vorrichtung einer zweiten Signatur des besagten ersten Zufallsworts ($r_C$), des besagten zweiten Zufallsworts ($r_T$), der Identifikation besagtes zweiten Zahlungsendgerätes (T), der Transaktionsidentifikation (T-id) und des besagten Sitzungsschlüssels (k),
- das Senden des besagten verschlüsselten Sitzungsschlüssels, der zweiten Signatur und eines Benutzerzertifikats ($cert_U$) an besagtes Endgerät,
- das Entschlüsseln besagtes Sitzungsschlüssels im besagten Zahlungsendgerät (11),
- das Überprüfen im besagten Zahlungsendgerät des besagten Zertifikats und der Signatur des Benutzers,
- wenn die Überprüfungen erfolgreich sind, das Verwenden des besagten Sitzungsschlüssels (k) als geteilter symmetrischer Sitzungsschlüssel, um spätere Meldungen zwischen besagter mobiler Vorrichtung und besagtem Zahlungsendgerät (11) zu sichern.

**10.** Smartcard (100) beinhaltend ein Computerprogramm, das Instruktionen enthält, welche von Verarbeitungsmitteln in besagter Smartcard ausgeführt werden, um die Smartcard dazu zu veranlassen, ein Verfahren durchzuführen, das mindestens die folgenden Schritte umfasst:

- abwarten, bis eine Identifikation (beispielsweise T, T-id) vom Zahlungsendgerät angezeigt wird und danach manuell in die mobile Vorrichtung, welche die Smartcard enthält, eingegeben und an die Smartcard geleitet wird,
- das Vorbereiten einer Instruktion, um eine erste die besagte Identifikation enthaltende Meldung (M1) über eine drahtlose Schnittstelle im Nahbereich (101) zu senden,
- das Abwarten einer zweiten über besagte drahtlose Schnittstelle empfangene Meldung (M2),
- überprüfen, ob ein in besagter zweiten Meldung enthaltenes Zertifikat ($cert_T$) besagte Identifikation enthält.

**11.** Smartcard gemäss dem vorhergehenden Anspruch, worin besagte zweite Meldung (M2) ferner eine erste Zufallszahl ($r_C$) umfasst, welche für die Überprüfung der Ungebrauchtheit von nachfolgend erhaltenen Meldungen verwendet wird.

**12.** Smartcard gemäss dem vorhergehenden Anspruch, worin besagtes Verfahren ferner umfasst:

- das Erzeugen eines zufälligen Sitzungsschlüssels (k),
- das Verschlüsseln besagtes Sitzungsschlüssels mit dem öffentlichen Schlüssel des Zahlungsendgerätes, welcher im besagten Zahlungsendgerätzertifikat enthalten ist,
- das Vorbereiten einer Instruktion, um eine dritte Meldung (M3), die besagten verschlüsselten Sitzungsschlüssel enthält, über besagte drahtlose Schnittstelle im Nahbereich zu senden.

**13.** Smartcard gemäss dem vorhergehenden Anspruch, wobei besagte dritte Meldung ferner ein Zertifikat ($cert_U$) des Benutzers besagter Smartcard enthält.

**14.** Smartcard gemäss dem vorhergehenden Anspruch, wobei besagte dritte Meldung (M3) ferner die Signatur besagter Antwort umfasst.

**15.** Smartcard gemäss einem der Ansprüche 10 bis 14, ferner einen GSM-Teil umfassend.

**16.** Computerprogramm auf einem Datenträger und der Instruktionen enthält, welche durch einen Computer ausgeführt werden können, um ein Endgerät (11) einschliesslich einer drahtlosen Schnittstelle im Nahbereich (101) dazu zu veranlassen, ein Verfahren durchzuführen, welches die folgenden Schritte umfasst:

- das Erzeugen einer Transaktionsidentifikation (T-id),
- das Anzeigen besagter Transaktionsidentifikation,
- das Abwarten einer ersten Meldung (M1), welche besagte Transaktionsidentifikation (T-id) enthält, über besagte drahtlose Schnittstelle im Nahbereich,
- das Senden einer zweiten Meldung (M2), welche ein Zertifikat besagtes Endgerätes an den Sender besagter Antwort (M1) enthält.

**17.** Computerprogramm auf einem Datenträger gemäss dem vorhergehenden Anspruch, wobei besagtes Verfahren ferner umfasst:

- das Extrahieren einer ersten Zufallszahl ($r_C$) aus besagter ersten Meldung (M1),
- das Verwenden besagter ersten Zufallszahl in einem gegenseitigen Authentifizierungsaustausch über besagte drahtlose Schnittstelle im Nahbereich,
- das Extrahieren eines authentifizierten symmetrischen Sitzungsschlüssels (k) aus einer nachfolgenden Meldung, wobei besagter Schlüssel für das Verschlüsseln von Zahlungsbefehlen, die über besagte drahtlose Schnittstelle im Nahbereich ausgetauscht werden, verwendet wird.

**18.** Computerprogramm auf einem Datenträger gemäss dem vorhergehenden Anspruch, worin besagte zweite Meldung (M2) ferner eine zweite Zufallszahl ($r_T$), besagte erste Zufallszahl ($r_C$), besagte zweite Zufallszahl ($r_T$) und besagte Transaktionsidentifikation (T-id) umfasst, wobei besagte zweite Meldung signiert wird.

**19.** Computerprogramm auf einem Datenträger gemäss einem der Ansprüche 16 bis 18, worin besagtes Verfahren ferner umfasst:

- das Senden von mit besagtem Sender ausgetauschter Zahlungsinformation an ein Berechnungszentrum (7).

**Revendications**

**1.** Procédé pour transmettre des informations de payement entre un équipement mobile et un terminal de payement (11) à travers une interface sans fil de faible portée (101), comprenant:

- afficher une identification sur l'affichage (110) dudit terminal de payement (11),
- introduire manuellement ladite identification sur les moyens d'introduction (103) dudit équipement mobile,
- utiliser ladite identification dans un premier message (M1) pour démarrer l'établissement d'un canal authentique et confidentiel entre ledit équipement mobile et ledit terminal de payement (11)

ledit canal étant utilisé pour échanger des informations de payement confidentielles entre ledit terminal de payement et ledit équipement mobile.

2. Procédé selon la revendication 1, ladite identification étant utilisée pour vérifier un certificat électronique envoyé ultérieurement par ledit terminal de payement.

3. Procédé selon la revendication précédente, ladite identification comprenant le nom du terminal de payement et/ ou un identificateur de transaction.

4. Procédé selon la revendication précédente, ledit identificateur de transaction (T-id) étant généré dans ledit terminal de payement (11), ledit premier message identifié avec ledit identificateur de transaction comprenant un premier numéro aléatoire ($r_C$), ledit premier numéro aléatoire assurant la fraîcheur dans un échange d'authentification mutuelle entre ledit équipement mobile et ledit terminal de payement (11) pour échanger une clé de session symétrique authentifiée (k), ladite clé étant utilisé pour chiffrer lesdites informations de payement.

5. Procédé selon la revendication précédente, comprenant en outre:

   - préparer dans ledit terminal de payement (11) un deuxième message (M2) contenant ledit identificateur de transaction (T-id) et un numéro aléatoire de terminal ($r_T$), et le signer avec la clé privée du terminal de payement ($Sig_T$),
   - envoyer ce message audit équipement mobile à travers ladite interface sans fil (101),
   - vérifier dans ledit équipement mobile ledit identificateur de transaction (T-id) et la signature ($Sig_T$) dudit terminal de payement (11) avec ladite identification,
   - utiliser ledit numéro aléatoire de terminal ($r_T$) pour vérifier la fraîcheur de d'au moins un message suivant dudit équipement mobile audit terminal de payement (11).

6. Procédé selon la revendication précédente, ledit message suivant authentifié avec ledit numéro aléatoire de terminal ($r_T$) comprenant ladite clé de session symétrique (k).

7. Procédé selon l'une des revendications 5 ou 6, ledit message envoyé par ledit terminal de payement comprenant en outre ledit premier numéro aléatoire ($r_C$) généré dans ledit équipement mobile.

8. Procédé selon l'une des revendications précédentes, comprenant en outre une étape de vérification de la clé publique de l'utilisateur avec une liste de révocations d'utilisateurs.

9. Procédé selon la revendication 1, ledit canal authentique et confidentiel étant établi avec les étapes suivantes:

   générer dans ledit équipement mobile un premier mot aléatoire ($r_C$),
   envoyer ledit premier mot aléatoire ($r_C$) audit terminal de payement,
   générer dans ledit terminal de payement (11) un deuxième mot aléatoire ($r_T$),
   générer dans ledit terminal de payement (11) une première signature dudit premier mot aléatoire, dudit deuxième mot aléatoire, de l'identificateur dudit terminal de payement (T) et de l'identificateur de transaction (T-id)

   - envoyer audit équipement mobile un certificat dudit terminal ($cert_T$), ledit deuxième mot aléatoire($r_T$) et ladite première signature,
   - générer dans ledit équipement mobile une clé de session (k) et la chiffrer avec la clé publique dudit terminal ($k_T$),
   - générer dans ledit équipement mobile une deuxième signature dudit premier mot aléatoire ($r_C$), dudit deuxième mot aléatoire ($r_T$), dudit identificateur dudit terminal (T), de l'identificateur de transaction (T-id) et de ladite clé de session (k),
   - envoyer ladite clé de session chiffrée, ladite deuxième signature et un certificat d'utilisateur ($cert_U$) audit terminal,
   - déchiffrer ladite clé de session dans ledit terminal de payement (11),
   - vérifier dans ledit terminal de payement ledit certificat et ladite signature de l'utilisateur,
   - si les vérifications sont réussies, utiliser ladite clé de session (k) comme une clé de session symétrique partagée pour sécuriser des messages ultérieurs entre ledit équipement mobile et ledit terminal de payement (11).

**10.** Carte à puce (100) ayant dessus un programme d'ordinateur comprenant des instructions devant être exécutées par des moyens de traitement dans ladite carte à puce pour exécuter un procédé comprenant au moins les étapes suivantes:

- attendre qu'une identification (par exemple T, T-id) soit affichée sur un terminal de payement et, ensuite, qu'elle soit introduite manuellement dans l'équipement mobile contenant la carte à puce et envoyée à la carte à puce,
- préparer une instruction pour envoyer un premier message (M1) contenant ladite identification à travers une interface sans fil de faible portée (101),
- attendre un deuxième message (M2) reçu à travers ladite interface sans fil,
- vérifier si un certificat ($cert_T$) contenu dans ledit deuxième message contient ladite identification (T).

**11.** Carte à puce selon la revendication précédente, ledit deuxième message (M2) comprenant en outre un premier numéro aléatoire ($r_C$) utilisé pour vérifier la fraîcheur de messages reçus par la suite.

**12.** Carte à puce selon la revendication précédente, ledit procédé comprenant en outre:

- générer une clé de session aléatoire (k),
- chiffrer ladite clé de session avec la clé publique de terminal de payement contenue dans le certificat dudit terminal de payement,
- préparer une instruction pour envoyer un troisième message (M3) comprenant ladite clé de session chiffrée à travers ladite interface sans fil de faible portée.

**13.** Carte à puce selon la revendication précédente, ledit troisième message comprenant en outre un certificat ($cert_U$) de l'utilisateur de ladite carte à puce.

**14.** Carte à puce selon la revendication précédente, ledit troisième message (M3) comprenant en outre une signature de ladite réponse.

**15.** Carte à puce selon une des revendications 10 à 14, comprenant en outre une partie GSM.

**16.** Un programme d'ordinateur sur un support et comprenant des instructions exécutables par ordinateur pour provoquer l'exécution par un terminal (11) comprenant une interface sans fil de faible portée (101) d'un procédé comprenant les étapes suivantes:

- générer un identificateur de transaction (T-id),
- afficher ledit identificateur de transaction,
- attendre un premier message (M1) comprenant ledit identificateur de transaction (T-id) à travers ladite interface sans fil de faible portée,

    envoyer un deuxième message (M2) contenant un certificat dudit terminal à l'expéditeur de ladite réponse (M1).

**17.** Programme d'ordinateur sur un support selon la revendication précédente, ledit procédé comprenant en outre:

    extraire un premier numéro aléatoire ($r_C$) dudit premier message (M1),
    utiliser ledit premier numéro aléatoire dans un échange d'identification mutuelle à travers ladite interface sans fil de faible portée,
    extraire une clé de session symétrique authentifiée (k) d'un message suivant, ladite clé étant utilisée pour chiffrer des ordres de payement échangés à travers ladite interface sans fil de faible portée.

**18.** Programme d'ordinateur sur un support selon la revendication précédente, ledit second message (M2) comprenant en outre un deuxième numéro aléatoire ($r_T$) ledit premier numéro aléatoire ($r_C$), ledit deuxième numéro aléatoire ($r_T$) et ledit identificateur de transaction (T-id), ledit deuxième message étant signé.

**19.** Programme d'ordinateur sur un support selon l'une des revendications 16 à 18, ledit procédé comprenant en outre:

- envoyer des informations de payement échangées avec ledit expéditeur à un serveur de facturation.

Fig. 1

A                                    B

$r_A$

$cert_B, r_B, A, Sig_B(r_B, r_A, A)$

$cert_A, B, Sig_A(r_A, r_B, B)$

**Fig. 2**

A                                    B

$r_A$

$cert_B, r_B, A, Sig_B(r_B, r_A, A)$

generates k

$cert_A, B, \{k\}_{Kb}, Sig_A(r_A, r_B, B, k)$

**Fig. 3**

A
(100)

B
(11)

S
(7)

$msg_1 =$
$cert_A, A, B, T\text{-info}, P\text{-info}, Sig_A(A, B, T\text{-info}, P\text{-info})$

$cert_B, Sig_B, (h(msg_1))$

$cert_A, A, B, T\text{-info}, P\text{-info}, Sig_A(A, ...)$

Fig. 4

EP 1 277 301 B1

EP 1 277 301 B1

1

100

11

T, T-info

T, T-id

T, T-id,$r_C$

$cert_T, r_T, Sig_T(r_T, r_C, T, T\text{-}id)$

generate k

$cert_U, \{k\}_{KT}, Sig_U(r_C, r_T, T, T\text{-}id, k)$

verify cert revocation list

$\{T, T\text{-}info\}_K$

confirm with U

$\{U, T, T\text{-}info, P\text{-}info, Sig_U(U, T, T\text{-}info, P\text{-}info)\}_K$

$\{Sig_T(h(U, T, T\text{-}info, P\text{-}info, Sig_U(...)))\}_K$

contact 7

Fig. 5